# EUROPÄISCHE PATENTSCHRIFT

(11) **EP 1 706 253 B1**
(45) Veröffentlichungstag und Bekanntmachung des Hinweises auf die Patenterteilung: **29.09.2010**
(21) Anmeldenummer: 04802703.1
(22) Anmeldetag: 10.11.2004
(51) Int. Cl.: B29C 45/50, B29C 45/82, B29C 45/77

(54) **EINSPRITZEINHEIT MIT SPINDELTRIEB UND HYDRAULISCHER UNTERSTÜTZUNG**
INJECTION UNIT COMPRISING A SPINDLE DRIVE AND HYDRAULIC SUPPORT
UNITE D'INJECTION A MECANISME D'ENTRAINEMENT PAR ARBRE ET ASSISTANCE HYDRAULIQUE

(30) Priorität: 25.11.2003 DE 10354954
(43) Veröffentlichungstag der Anmeldung: 04.10.2006
(73) Patentinhaber: Bosch Rexroth AG, 70184 Stuttgart (DE)
(72) Erfinder: DANTLGRABER, Jörg, 97816 Lohr am Main (DE)
(74) Vertreter: Winter, Brandl, Fürniss, Hübner, Röss, Kaiser, Polte - Partnerschaft
(86) Internationale Anmeldenummer: PCT/DE2004/002486
(87) Internationale Veröffentlichungsnummer: WO 2005/051633

(56) Entgegenhaltungen:
- EP-A- 0 760 277
- EP-A- 0 785 059
- WO-A-02/04193
- WO-A-02/11969
- DE-A1- 10 104 109
- US-B1- 6 379 119
- PATENT ABSTRACTS OF JAPAN Bd. 2000, Nr. 11, 3. Januar 2001 (2001-01-03) -& JP 2000 218666 A (YUKEN KOGYO CO LTD), 8. August 2000 (2000-08-08)
- JOHANNABER, MICHAELI: "Handbruch Spritzgiessen" 13. November 2001 (2001-11-13), CARL HANSER VERALG , XP002323573 ISBN: 3-446-15632-1 Seite 887 - Seite 903 Abbildungen 7.137,7,140,7.141,7.146
- "GRUNDLAGEN DER HYSRAULISCHEN SCHALTUNGSTECHNIK" OLHYDRAULIK UND PNEUMATIK, KRAUSSKOPF VERLAG FUR WIRTSCHAFT GMBH. MAINZ, DE, Bd. 37, Nr. 8, 1. August 1993 (1993-08-01), Seiten 618-621, XP000413160 ISSN: 0341-2660
- "GRUNDLAGEN DER HYDRAULISCHEN SCHALTUNGSTECHNIK" OLHYDRAULIK UND PNEUMATIK, VEREINIGTE FACHVERLAGE, MAINZ, DE, Bd. 37, Nr. 9, Januar 1993 (1993-01), Seiten 677,678,680-68, XP000195240 ISSN: 0341-2660
- "GRUNDLAGEN DER HYDRAULISCHEN SCHALTUNGSTECHNIK" OLHYDRAULIK UND PNEUMATIK, VEREINIGTE FACHVERLAGE, MAINZ, DE, Bd. 38, Januar 1994 (1994-01), Seiten 24-27, XP000195265 ISSN: 0341-2660

## Beschreibung

Die Erfindung betrifft eine Einspritzeinheit gemäß dem Oberbegriff des Patentanspruchs 1.

In der Vergangenheit wurden Spritzgießmaschinen mit vergleichsweise hohen Zuhaltekräften mit einer hydraulisch betätigten Einspritz- und Schließeinheit ausgeführt. In jüngerer Zeit geht eine Entwicklung dahin, zumindest einen Teil der hydraulischen Antriebsaggregate durch elektrisch betätigte Antriebe wie beispielsweise Spindeltriebe zu ersetzen.

Aus der DE 101 35 516 A1 ist eine Einspritzeinheit für eine Spritzgießmaschine bekannt, bei der in einem beheizten Zylinder eine Schnecke drehbar und axial verschiebbar geführt ist. Die Schnecke wird über einen Spindeltrieb angetrieben, wobei eine Spindel koaxial zur Schnecke angeordnet ist und von einem Elektromotor angetrieben wird. Der Schnecke ist des Weiteren ein Hydrozylinder zugeordnet, dessen bodenseitiger Zylinderraum zum Regeln eines Staudruckes über ein Drosselventil mit einer Pumpe bzw. einem Tank verbindbar ist. Diese Pumpe wird über einen weiteren Elektromotor betätigt. Zum Fördern und Plastifizieren des Kunststoffgranulats wird die Spindel über den erstgenannten Elektromotor angetrieben, wobei die Spindelmutter drehbar und axial nicht verschiebbar gelagert ist und mitdreht. Das Kunststoffgranulat wird aufgeschmolzen, mittels der Schnecke gefördert und durch den sich vor der Schnecke im Zylinder ausbildenden Staudruck wird die Schnecke in Axialrichtung nach hinten, weg von der Angußbuchse der Einspritzeinheit bewegt. Dieser Staudruck wird über den Hydrozylinder und durch geeignete Einstellung des diesem zugeordneten Drosselventils nach einem vorbestimmten Druckverlauf geregelt. Nach diesem Dosier- und Plastifiziervorgang wird zum Einspritzen der Formmasse die Schnecke in Axialrichtung verschoben. Hierzu wird die Spindelmutter mittels einer Bremse festgelegt und die Drehrichtung des Elektromotors umgesteuert, so dass die Spindel nach vorne, hin zur Einspritzdüse des Zylinders bewegt wird. Ein Mitdrehen der Schnecke wird dabei durch einen Freilauf verhindert. Durch diesen Axialvorschub der Schnecke wird dann die Kunststoffmasse über die Einspritzdüse (Verschlussdüse) des Zylinders in die Kavität des Werkzeugs eingespritzt. Dieser Axialvorschub der Schnecke wird dabei durch Ansteuerung des Hydrozylinders unterstützt, dessen Zylinderraum über die genannte Pumpe mit Druckmittel versorgt wird. Nachteilig bei dieser Lösung ist, dass die Antriebe der Pumpe und des Spindeltriebs einen erheblichen vorrichtungstechnischen und regelungstechnischen Aufwand erfordern.

Aus der DE 101 04 109 ist eine Einspritzeinheit bekannt, die einen ähnlichen Aufbau wie die vorbeschriebene Lösung hat. D. h., auch bei dieser Lösung ist ein erheblicher vorrichtungstechnischer Aufwand zur Ansteuerung des Pumpenantriebs und des Spindeltriebs erforderlich.

In der DE 102 39 591 ist eine Einspritzeinheit beschrieben, bei der die Schnecke zum Dosieren und Plastifizieren mittels eines Elektromotors antreibbar ist. Die Axialverschiebung der Schnecke erfolgt in herkömmlicher Weise mittels eines Hydraulikzylinders, wobei der Elektromotor eine Pumpe antreibt, über die ein Hydrospeicher aufgeladen werden kann, der mit den beiden Druckräumen des als Differentialzylinder ausgeführten Hydrozylinders verbindbar ist. Ein Nachteil dieser Lösung besteht darin, dass die Betätigung der Schnecke in herkömmlicher Weise mittels eines Hydraulikzylinders erfolgt.

In der EP 0 760 277 A1 ist eine Einspritzeinheit offenbart, bei der die Schnecke über einen ersten Antrieb zum Plastifizieren und Dosieren drehbar ist. Die Axialverschiebung erfolgt mittels eines auf eine Zahnstange der Schnecke wirkenden Ritzels, das über einen eigenen Elektromotor angetrieben wird. Die Schnecke ist des Weiteren mit einem Hydrozylinder verbunden, über den der Staudruck während des Plastifizierens gesteuert werden kann. Dieser Hydrozylinder wirkt auch während des Einspritzvorganges zusätzlich auf die Schnecke. Der Elektromotor zum Antrieb des Ritzels treibt zusätzlich auch eine Pumpe an, über die ein Druckspeicher aufgeladen werden kann, an den ein Druckraum des Zylinders angeschlossen ist. Auch diese Lösung erfordert einen erheblichen vorrichtungstechnischen Aufwand und die Druckschrift enthält keinerlei Hinweis darauf, dass über den Hydrozylinder der Staudruck während des Plastifizierens regelbar ist.

Ein weiteres Einspritzaggregat ist aus der WO 0211969 bekannt.

Dem gegenüber liegt der Erfindung die Aufgabe zugrunde, eine Einspritzeinheit zu schaffen, durch die das Plastifizieren und Einspritzen mit minimalem vorrichtungstechnischen Aufwand steuerbar ist.

Diese Aufgabe wird durch eine Einspritzeinheit mit den Merkmalen des Patentanspruchs 1 gelöst.

Der Oberbegriff des Anspruchs 1 geht von der WO 0211969 aus.

Erfindungsgemäß hat die Einspritzeinheit eine Schnecke, die mittels eines Spindeltriebs rotatorisch zum Dosieren von Formmasse antreibbar ist. Der Spindel ist des Weiteren ein Hydrozylinder zugeordnet, der zusätzlich in Axialrichtung auf die Schnecke wirkt. Erfindungsgemäß wird der Hydraulikzylinder über eine Pumpeinrichtung mit Druckmittel versorgt, die von demjenigen Motor angetrieben wird, der auch zum Antrieb des Spindeltriebs verwendet ist. Die Pumpeinrichtung ist so ausgelegt, dass der Hydraulikzylinder zur Einstellung des auf die Schnecke wirkenden Druckes mit etwas mehr Druckmittel versorgt wird, als benötigt ist.

Die Überschussmenge kann gemäß einer vorteilhaften Weiterbildung der Erfindung über ein einstellbares Drosselventil zu einem Tank abgeführt oder zum Aufladen eines Hydrospeichers verwendet werden. D. h., durch Einstellung des Drosselventils kann dann beispielsweise während des Plastifizierens ein Staudruck geregelt werden.

Bei einer Variante der Erfindung ist die Pumpeinrichtung als Kolbenpumpe ausgeführt, deren Plungerkolben von einer Spindelanordnung betätigbar ist, die ihrerseits von dem Motor des Spindeltriebs antreibbar ist.

Bei dieser Variante wird die Spindelanordnung über eine Kupplung mit dem Motor verbunden, so dass beispielsweise zum Plastifizieren die Kupplung gelöst ist und beim Einspritzen einrückt, so dass die Drehbewegung des Elektromotors in eine Axialverschiebung des Plungerkolbens umgesetzt wird, so dass die Axialbewegung der Schnecke durch den aufgebauten Druck unterstützt ist. Zum Zurückfahren des Plungerkolbens ist bei dieser Lösung zwischen dem Elektromotor und dem Antrieb des Spindeltriebs eine weitere Kupplung vorgesehen, die beim Zurückfahren gelöst ist, so dass der Plungerkolben unabhängig vom Spindeltrieb in seine Grundstellung zurückfahrbar ist.

Alternativ zum vorbeschriebenen Ausführungsbeispiel, bei dem der Elektromotor über Kupplungen mit dem Spindeltrieb und einer Plungerpumpe verbunden ist kann auch eine herkömmliche Pumpeinrichtung direkt von dem Motor angetrieben werden, wobei zum Plastifizieren ein Bypassventil aufgesteuert wird, durch das eine Bypassleitung aufgesteuert wird, über die der Ausgang der Pumpe mit dem Tank verbunden ist, wobei die Druckmittelabfuhr aus dem Hydrozylinder alleine durch die Wirkung des Drosselventils bestimmt ist.

Erfindungsgemäß wird es bevorzugt, wenn zwischen der Spindelanordung und der Schnecke ein Freilauf vorgesehen ist, der während des Einspritzvorgangs so wirkt, dass die Schnecke ohne Rotation in Axialverschiebung verschiebbar ist.

Eine Spindelmutter des Spindeltriebs lässt sich vorteilhafterweise mittels einer Bremse festlegen.

Vorzugsweise wird der Ringraum des Hydrozylinders an die Pumpe angeschlossen und über das Drosselventil mit dem Tank oder dem Hydrospeicher verbunden. Ein bodenseitiger Zylinderraum des Hydrospeichers wird vorzugsweise mit einem konstanten Druck eines weiteren Hydrospeichers beaufschlagt.

Sonstige vorteilhafte Weiterbildungen der Erfindung sind Gegenstand weiterer Unteransprüche.

Im folgenden werden bevorzugte Ausführungsbeispiele der Erfindung anhand schematischer Zeichnungen näher erläutert. Es zeigen:
Figur 1 eine schematische Ansicht eines bevorzugten Ausführungsbeispiels einer Einspritzeinheit und
Figur 2 eine Ansicht eines zweiten Ausführungsbeispiels mit Plungerpumpe.

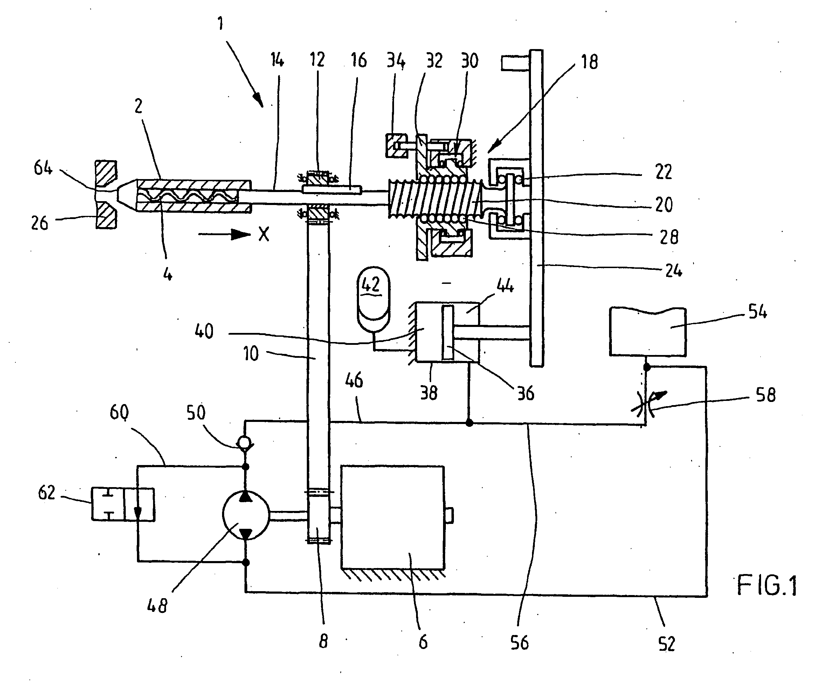

In Figur 1 ist Prinzipschaubild einer Einspritzeinheit 1 einer elektrohydraulisch angetriebenen Spritzgießmaschine dargestellt. Die Einspritzeinheit 1 hat einen beheizbaren Zylinder, in dem eine Schnecke 4 drehbar und axial verschiebbar aufgenommen ist. Der Drehantrieb der Schnecke 4 erfolgt mittels eines Elektromotors 6, der über ein Ritzel 8, einen Zahnriemen 10 und über ein Zahnrad 12 mit einem aus dem Zylinder 2 herausragenden Endabschnitt 14 der Schnecke 4 in Wirkverbindung steht. Das Zahnrad 12 ist über Axiallager in Axialrichtung festgelegt und über eine oder mehrere Passfedern 16 drehfest mit dem Endabschnitt 14 der Schnecke 4 derart verbunden, dass diese mit Bezug zum Zahnrad 12 axial verschiebbar ist.

Der Endabschnitt der Schnecke 14 ist mit einem Spindeltrieb 18 verbunden, über den die Schnecke 4 in Axialrichtung verschiebbar ist.

Dieser Spindeltrieb 18 hat eine Spindel 20, die über ein Axiallager 22 in Axialrichtung an einem Rahmen 24 der Einspritzeinheit 1 abgestützt ist. Dieser Rahmen 24 ist seinerseits über nicht gezeigte Führungselemente auf dem Bett der Spritzgießmaschine gelagert und mit Bezug zu diesem gemeinsam mit der Einspritzeinheit in Axialrichtung durch nicht gezeigte hydraulische oder elektrische Betätigungselemente bewegbar, so dass die Einspritzeinheit 1 zum Einspritzen in Anlage an eine Angußbuchse 26 eines Werkzeugs bringbar ist, das auf die Auf spannplatten einer Schließeinheit aufgespannt ist.

Die Spindel 20 kämmt mit einer Spindelmutter 28, die beim dargestellten Ausführungsbeispiel als Kugelumlaufmutter ausgeführt ist. Die Spindelmutter 28 ist in Axialrichtung über eine Axialanlageranordnung 30 festgelegt, so dass die Spindel 20 in Axialrichtung mit Bezug zur Spindelmutter 28 bewegbar ist.

Die Spindelmutter 28 hat einen radial vorspringenden, scheibenbremsförmigen Bremskragen 32, an dem eine Bremse 34 angreift, um die Spindelmutter 28 festzulegen, so dass diese an einer Rotation gehindert wird.

Am Rahmen 24 ist des Weiteren noch ein Differentialkolben 36 eines Hydrozylinders 38 abgestützt. Ein bodenseitiger Zylinderraum 40 des Hydrozylinders 36 ist mit einem Hydrospeicher 42 verbunden, während ein Ringraum 44 über eine Druckleitung 46 mit dem Druckanschluss einer Pumpe 48 verbunden ist. Die Pumpe 48 wird - wie in Figur 1 angedeutet - ebenfalls über den Elektromotor 6 angetrieben. Zwischen Pumpe 48 und Hydrozylinder 38 ist ein in Richtung zu letzterem öffnendes Rückschlagventil 50 vorgesehen, das eine Druckmittelströmung vom Zylinder 38 hin zur Pumpe 48 verhindert. Der Sauganschluss der Pumpe 48 ist über eine Saugleitung 52 mit einem flexiblen, geschlossenen Tank 54 verbunden. Von der Druckleitung 46 zweigt eine Ablauf leitung 56 ab, die über ein einstellbares Drosselventil 58 mit dem Tank 54 verbunden ist.

Von dem Leitungsabschnitt zwischen dem Rückschlagventil 50 und dem Druckanschluss der Pumpe 48 zweigt eine Bypassleitung 60 ab, in der ein Bypassventil 62 vorgesehen ist.

Die Funktion der Spritzgießeinheit ist wie folgt:

Zum Plastifizieren (Dosieren und Aufschmelzen der Formmasse) wird der Elektromotor 6 angesteuert, das Bypassventil 62 in seine dargestellte Öffnungsstellung gebracht, so dass das von der Pumpe 48 geförderte Druckmittel über die Bypassleitung 60 und das Bypassventil 62 sowie die Saugleitung 52 zum Tank 54 zurückströmen kann. Über den Zahnriementrieb (8, 10, 12) wird der Endabschnitt 14 der Schnecke 4 in Drehung versetzt, wobei die Bremse 32 gelüftet ist, so dass die Spindelmutter 28 in ihrer axial festgelegten Position eine Drehbewegung ausführt. Durch die Drehbewegung der Schnecke 4 wird Kunststoffgranulat aus einem nicht dargestelltem Vorratsbehälter heraus in das Innere des Zylinders 2 gefördert und dort aufgeschmolzen und homogenisiert.

Die aufgeschmolzene Formmasse wird dann über die Schnecke 4 in einen an einen an eine Einspritzdüse 64 des Zylinders 2 angrenzenden Stauraum gefördert. Je nach der Kraft, mit der die Schnecke 4 in Richtung auf diesen Stauraum beaufschlagt ist, stellt sich ein Staudruck ein. Durch diesen wird die Schnecke 4 in Pfeilrichtung X zurück verschoben. Dieser Axialverschiebung in X-Richtung wirkt der Druck in dem sich verkleinernden Ringraum 44 des Zylinders 38 entgegen.

Wie vorstehend erwähnt, ist dieser Ringraum 44 über die Druckleitung 46 und das verstellbare Drosselventil 58 mit dem Tank 54 verbunden. Durch geeignete Einstellung des Drosselquerschnitts des Drosselventils 58 kann das zum Tank 54 hin abströmende Druckmittel gedrosselt werden, so dass der sich im Zylinder 2 einstellende Staudruck durch Veränderung des wirksamen Drosselquerschnitt des Drosselventils 58 nach einem vorbestimmten Staudruckverlauf einstellbar ist.

Nach dem Aufschmelzen und Homogenisieren der Formmasse wird das Bypassventil 62 in der Bypassleitung 60 in seine Sperrstellung gebracht und der Elektromotor 6 umgesteuert, wobei die Drehrichtung im Vergleich zum Plastifizieren umgedreht ist. Die Bremse 34 wird eingerückt, so dass ein Drehen der Spindelmutter 30 verhindert ist. Die Schnecke 4 führt dabei keine Drehung aus, da zwischen dem Endabschnitt 14 und der Schnecke 4 ein Freilauf vorgesehen ist, der bei dieser Drehrichtung des Elektromotors 6 wirksam wird. Durch die Drehung des Endabschnitts 14 und den Eingriff mit der Spindelmutter 28 wird die Spindel 20 und damit die Schnecke 4 in Axialrichtung nach vorne, hin zur Angußbuchse 26 verschoben. Diese Axialverschiebung wird durch die Wirkung des Hydrozylinders 38 unterstützt, da die ebenfalls vom Elektromotor 6 angetriebene Pumpe 48 Druckmittel über die Druckleitung 46 in den Ringraum fördert, so dass dieser vergrößert und der Rahmen 24 mitsamt der Schnecke 4 in der Darstellung gemäß Figur 1 nach links bewegt wird - die aufgeschmolzene Formmasse wird in die Kavität des Werkzeugs eingespritzt. Die Pumpe 48 ist so ausgelegt, dass sie etwas mehr Druckmittel liefert, als zur Axialvergrößerung des Ringraums 44 erforderlich ist. Die überschüssige Druckmittelmenge kann über den veränderlichen Querschnitt des Drosselventils 48 zum Tank 54 abgeführt werden. D. h, durch die Einstellung des Drosselventils 58 kann die in Axialrichtung auf die Schnecke 4 übertragene Kraft des Hydrozylinders 38 variiert werden.

Nach dem Einspritzen der Formmasse wird die gesamte Einspritzeinheit 1 wieder über die nicht dargestellte Antriebseinheit (Spindeltrieb, Hydraulikzylinder) in die in Figur 1 dargestellte Grundposition zurückgefahren und der Zyklus (Plastifizieren, Einspritzen) beginnt von vorne.

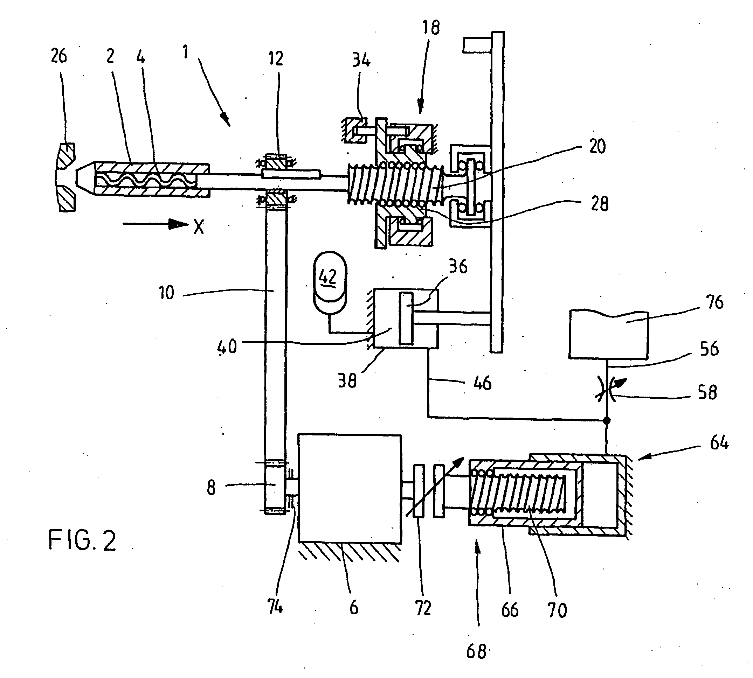

In Figur 2 ist ein weiteres Ausführungsbeispiel der Erfindung gezeigt. Der Grundaufbau der Einspritzeinheit 1 mit dem Zylinder 2, der Schnecke 4, dem Elektromotor 6 sowie dem Zahnriemenantrieb 8, 10, 12, sowie dem Spindeltrieb 18 und dem Hydrozylinder 38 entspricht weitestgehend dem vorbeschriebenen Aufbau, so dass hinsichtlich der Beschreibung dieser Elemente auf die vorhergehenden Ausführungen verwiesen ist.

Anstelle der Pumpe 48 wird bei dem in Figur 2 dargestellten Ausführungsbeispiel eine Plungerpumpe 64 verwendet, deren Plunger 66 über eine Spindelanordnung 68 antreibbar ist. Die Spindelmutter ist dabei im drehfest geführten Plunger 66 ausgebildet. Diese Spindelmutter kämmt mit einer Gewindespindel 70, die über eine Kupplung 72 mit dem Elektromotor 6 verbunden ist. Zwischen dem Elektromotor 6 und dem Ritzel 8 ist eine weitere Kupplung 74 vorgesehen. Anstelle des elastischen Tanks 54 wird bei dem in Figur 2 dargestellten Ausführungsbeispiel ein Hydrospeicher 76 verwendet. Der Druckanschluss der Plungerpumpe 64 ist über die Druckleitung 46 mit dem Ringraum 36 des Hydrozylinders 38 verbunden. Von der Druckleitung 46 zweigt, wie beim vorbeschriebenen Ausführungsbeispiel, eine zum Hydrospeicher 76 führende Ablaufleitung 56 ab, in der das verstellbare Drosselventil 58 vorgesehen ist. Die Funktion dieser Spritzeinheit 1 ist wie folgt:
Es sei angenommen, dass die gesamte Einspritzeinheit über den nicht dargestellten Antrieb in eine Position zurückgefahren wurde, in der sie nicht mehr an der Angußbuchse 26 anliegt.

Zum Plastifizieren wird der Motor 6 angesteuert, wobei die Kupplung 72 gelöst ist und die Kupplung 74 geschlossen ist. Dementsprechend wird die Schnecke 4 in der vorbeschriebenen Weise über den Elektromotor 6 und den Zahnriementrieb 8, 10, 12 angetrieben. Die Bremse 34 ist gelöst, so dass die Spindelmutter 28 drehen kann und durch den sich aufbauenden Staudruck wird die Schnecke 4 zurück, d. h. in der Darstellung nach Figur 2 nach rechts (Pfeilrichtung X) verschoben. Der Staudruck lässt sich wie beim vorhergehenden Ausführungsbeispiel durch geeignete Einstellung des Drosselventils 58 regeln, über das der sich verkleinernde Ringraum 36 des Hydrozylinders 38 mit dem Hydrospeicher 76 verbunden ist. Nach dem Aufschmelzen und Homogenisieren der Formmasse wird die erste Kupplung 72 geschlossen, so dass die Spindel 70 der Spindelanordnung 68 angetrieben und die Einspritzeinheit 1 noch vorne gefahren wird. Die Drehrichtung des Elektromotors 6 ist dabei so gewählt, dass der Plungerkolben 66 in der Darstellung gemäß Figur 2 nach rechts bewegt wird, so dass etwas mehr Druckmittel bereit gestellt wird, als zum Füllen des sich vergrößernden Ringraums 36 erforderlich ist. Die Überschussmenge des Druckmittels wird dann über das verstellbare Drosselventil 58 zum Hydrospeicher 76 geführt, so dass dieser aufgeladen wird. Die Bremse 34 ist eingerückt, so dass die Schnecke 4 durch den Eingriff der Spindel 70 mit der Spindelmutter 28 und durch die unterstützende Wirkung des Hydrozylinder 38 nach links (Figur 2) verschoben wird, und die Formmasse über die an der Angußbuchse 26 anliegende Verschlussdüse in die Kavität eingespritzt wird.

Zur Einleitung des nächsten Zyklus wird die Kupplung 74 gelöst, die Drehrichtung des Elektromotors 6 umgedreht, so dass die Spindel 70 ebenfalls in entgegengesetzter Richtung gedreht wird und entsprechend der Plungerkolben 66 ausgefahren wird. Parallel oder danach wird dann die Einspritzeinheit 1 zurückgefahren, so dass der Zylinder 2 von der Angußbuchse 26 abhebt - der Zyklus beginnt von neuem.

In kinematischer Umkehr könnte auch die Spindelmutter angetrieben werden und die Spindel in Axialrichtung festgelegt werden, wobei dann die Spindelmutter mit der Schnecke 4 verbunden ist.

Offenbart ist eine Einspritzeinheit für eine Spritzgießmaschine, mit einer Schnecke die mittels eines Spindeltriebs antreibbar ist. Das Antreiben des Spindeltriebs erfolgt über einen Elektromotor. Zusätzlich wird über einen Hydraulikzylinder eine in Axialrichtung wirkende Kraft auf die Schnecke der Einspritzeinheit übertragen. Erfindungsgemäß wird über den Elektromotor eine Pumpe angetrieben, über die ein Druckraum des Zylinders mit mehr Druckmittel versorgbar ist, als bei Axialverschiebung des Zylinders benötigt wird.

### Bezugszeichenliste

- 2: 1 Einspritzeinheit Zylinder
- 4: Schnecke
- 6: Elektromotor
- 8: Ritzel
- 10: Zahnriemen
- 12: Zahnrad
- 14: Endabschnitt der Schnecke
- 16: Passfeder
- 18: Spindeltrieb
- 20: Spindel
- 22: Axiallager
- 24: Rahmen
- 26: Angußbuchse
- 28: Spindelmutter
- 30: Axiallageranordnung
- 32: Bremskragen
- 34: Bremse
- 36: Kolben
- 38: Hydrozylinder
- 40: Zylinderraum
- 42: Hydrospeicher
- 44: Ringraum
- 46: Druckleitung
- 48: Pumpe
- 50: Rückschlagventil
- 52: Saugleitung
- 54: Tank
- 56: Ablaufleitung
- 58: Drosselventil
- 60: Bypassleitung
- 62: Bypassventil
- 64: Plungerpumpe
- 66: Plungerkolben
- 68: Spindelanordnung
- 70: Gewindespindel
- 72: Kupplung
- 74: zweite Kupplung
- 76: Hydrospeicher

## Patentansprüche

1. Einspritzeinheit einer Spritzgießmaschine mit einer Schnecke (4), die mittels eines nicht selbsthemmenden, durch einen Motor (6) angetriebenen Spindeltriebs (18) antreibbar ist und der ein Hydrozylinder (38) zum Erzeugen einer auf den Spindeltrieb (18) wirkenden Axialkraft zugeordnet ist, wobei der Motor (6) eine Pumpeinrichtung (48, 64) antreibt, **dadurch gekennzeichnet, dass** über die Pumpeneinrichtung (48, 64) ein erster Druckraum (44) des Hydrozylinders (38) mit mehr Druckmittel versorgbar ist, als zur Erzeugung der Axialkraft benötigt ist, wobei eine Druckleitung (46) zwischen der Pumpeinrichtung (48, 64) und dem Hydrozylinder (38) über ein Drosselventil (58) mit einem geschlossenen Tank (54) oder mit einem Hydrospeicher (76) verbunden ist.

2. Einspritzeinheit nach Patentanspruch 1, wobei ein Ausgang der Pumpeinrichtung (48) über ein Bypassventil (62) mit dem Tank (54) verbindbar ist, so dass der Hydrozylinder (38) nicht über die Pumpe (48) mit Druckmittel versorgt wird.

3. Einspritzeinheit nach Patentanspruch 1, wobei die Pumpeinrichtung eine Kolbenpumpe (64) ist, deren Plungerkolben (66) über eine vom Motor antreibbare Spindelanordnung (68) angetrieben ist.

4. Einspritzeinheit nach Patentanspruch 3, wobei die Spindelanordnung (68) über eine Kupplung (72) mit dem Motor (6) verbindbar ist.

5. Einspritzeinheit nach Patentanspruch 4, wobei der Motor (6) über eine weitere Kupplung (74) mit dem Spindeltrieb (18) verbindbar ist.

6. Einspritzeinheit nach einem der vorhergehenden Patentansprüche, wobei ein zweiter Druckraum, vorzugsweise der bodenseitige Zylinderraum (40), des Hydrozylinders (38) mit einem Hydrospeicher (42) verbunden ist.

7. Einspritzeinheit nach einem der vorhergehenden Patentansprüche, wobei die Schnecke (4) über einen Freilauf mit dem Spindeltrieb (14) verbunden ist.

8. Einspritzeinheit nach einem der vorhergehenden Patentansprüche, wobei die Spindelmutter (28) des Spindeltriebs (18) mittels einer Bremse (24) gegenüber der angetriebenen Spindel (20) festlegbar ist.

## Claims

1. Injection unit of an injection molding machine, comprising a screw (4) adapted to be driven by means of a spindle drive (18) that is not self-locking and is driven by a motor (6), and to which a hydraulic cylinder (38) for generating an axial force acting on the spindle drive (18) is associated, wherein the motor (6) drives pump means (48, 64), **characterized in that** a first pressure chamber (44) of the hydraulic cylinder (38) may be supplied by the pump means (48, 64) with more pressure medium than is needed for generating the axial force, wherein a pressure line (46) between the pump means (48, 64) and the hydraulic cylinder (38) is connected via a throttle valve (58) with a closed tank (54) or with a hydraulic accumulator (76).

2. The injection unit according to claim 1, wherein an outlet of the pump means (48) is adapted to be connected with the tank (54) via a bypass valve (62), so that the hydraulic cylinder (38) is supplied with pressure medium not via the pump (48).

3. The injection unit according to claim 1, wherein the pump means is a piston pump (64), the plunger piston (66) of which is driven through a spindle assembly (68) adapted to be driven by the motor.

4. The injection unit according to claim 3, wherein the spindle assembly (68) is adapted to be connected with the motor (6) through a clutch (72).

5. The injection unit according to claim 4, wherein the motor (6) is adapted to be connected with the spindle drive (18) through an additional clutch (74).

6. The injection unit according to any one of the preceding claims, wherein a second pressure chamber, preferably the bottom-side cylinder chamber (40), of the hydraulic cylinder (38) is connected with a hydraulic accumulator (42).

7. The injection unit according to any one of the preceding claims, wherein the screw (4) is connected with the spindle drive (14) through a free-wheel.

8. The injection unit according to any one of the preceding claims, wherein the spindle nut (28) of the spindle drive (18) is adapted to be immobilized relative to the driven spindle (20) by means of a brake (24).

## Revendications

1. Unité d'injection d'une presse d'injection, avec une vis sans fin (4) entraînable au moyen d'une commande à broche (18) non autobloquante, elle-même entraînée par un moteur (6), et à laquelle est affecté un vérin hydraulique (38) destiné à générer un effort axial s'exerçant sur la commande à broche (18), le moteur (6) entraînant un dispositif à pompe (48, 64), **caractérisé en ce qu'**une première chambre de pression (44) du vérin hydraulique (38) peut être alimentée avec une quantité de fluide sous pression supérieure à celle exigée pour le déplacement axial, une conduite de refoulement (46) étant reliée par une vanne d'étranglement (58) à un réservoir clos (54) ou à un accumulateur hydraulique (76) entre le dispositif à pompe (48, 64) et le vérin hydraulique (38).

2. Unité d'injection selon la revendication 1, où une sortie du dispositif à pompe (48) peut être reliée au réservoir (54) par une vanne by-pass (62), de telle manière que le vérin hydraulique (38) n'est plus alimenté en fluide sous pression par la pompe (48).

3. Unité d'injection selon la revendication 1, où le dispositif à pompe est une pompe à piston (64) dont le piston plongeur (66) est entraîné par un dispositif à broche (68) lui-même entraînable par le moteur.

4. Unité d'injection selon la revendication 3, où le dispositif à broche (68) peut être relié au moteur (6) par un accouplement (72).

5. Unité d'injection selon la revendication 4, où le moteur (6) peut être relié à la commande à broche (18) par un autre accouplement (74).

6. Unité d'injection selon l'une des revendications précédentes, où une deuxième chambre de pression du vérin hydraulique (38), de préférence la chambre (40) dans le fond du vérin, est reliée à un accumulateur hydraulique (42).

7. Unité d'injection selon l'une des revendications précédentes, où la vis sans fin (4) est reliée par une roue libre à la commande à broche (14).

8. Unité d'injection selon l'une des revendications précédentes, où l'écrou de broche (28) de la commande à broche (18) peut être bloqué au moyen d'un frein (24) relativement à la broche entraînée (20).
